# FASCICULE DE BREVET EUROPEEN

(11) **EP 1 351 761 B1**
(45) Date de publication et mention de la délivrance du brevet: **16.02.2005**
(21) Numéro de dépôt: 01994924.7
(22) Date de dépôt: 20.12.2001
(51) Int. Cl.: B01J 8/00

(54) **PROCEDE DE CHARGEMENT D'UNE ENCEINTE AVEC DES PARTICULES SOLIDES**
VERFAHREN ZUM LADEN EINER KAMMER MIT FESTSTOFFEN
METHOD FOR LOADING A CHAMBER WITH SOLID PARTICLES

(30) Priorité: 20.12.2000 FR 0016698
(43) Date de publication de la demande: 15.10.2003
(73) Titulaire: TotalFinaElf France, 92800 Puteaux (FR)
(72) Inventeur: CRESPIN, Pierre, F-76620 Le Havre (FR); BARTHOD, Daniel, The Woodlands, Texas 77381 (US); PETITJEAN, Emmanuelle, F-57500 Saint Avold (FR); LEBOUTEILLER, Marc, F-76620 Le Havre (FR)
(74) Mandataire: Jolly, Jean-Pierre
(86) Numéro de dépôt international: PCT/FR2001/004091
(87) Numéro de publication internationale: WO 2002/049749

(56) Documents cités:
- EP-A- 0 769 462
- PATENT ABSTRACTS OF JAPAN vol. 1998, no. 06, 30 avril 1998 (1998-04-30) & JP 10 043576 A (IDEMITSU ENG CO LTD), 17 février 1998 (1998-02-17)
- PATENT ABSTRACTS OF JAPAN vol. 1998, no. 08, 30 juin 1998 (1998-06-30) & JP 10 066858 A (IDEMITSU ENG CO LTD), 10 mars 1998 (1998-03-10)

## Description

La présente invention concerne un nouveau procédé de chargement de particules solides dans une enceinte, permettant d'obtenir une meilleure distribution d'un fluide entre les particules chargées.

Ce procédé concerne plus particulièrement le chargement des réacteurs à lit fixe de type chimique ou électrochimique, pétrolier ou pétrochimique, avec des particules solides à l'état divisé, qui peuvent se présenter sous forme de billes, de grains, de cylindres, de pastilles, de bâtonnets, ou de toute autre forme, mais de dimensions relativement faibles. Les particules peuvent être en particulier des tamis moléculaires ou des grains de catalyseurs solides, généralement extrudés, réalisés soit sous forme irrégulière, soit sous forme de mono- ou multilobes, dont les dimensions varient selon les cas, de quelques dixièmes de millimètres à quelques centimètres.

C'est à cette application que l'on se référera plus particulièrement dans la suite de la présente description, mais le procédé conforme à l'invention s'applique au chargement de tout autre type de particules solides dans une enceinte.

On sait que la méthode de chargement d'un réacteur qui consiste à déverser le catalyseur à l'aide d'un conduit souple, dit "manche" ou "chaussette" dans la technique (de l'anglais « sock loading »), ou encore à utiliser des seaux emplis de catalyseur, conduit à des chargements hétérogènes ayant pour conséquences une réaction chimique incomplète et une désactivation apparente de la masse catalytique.

Pour remédier à cet inconvénient et plus particulièrement pour augmenter l'homogénéité et la densité du lit catalytique, on sait également que l'on peut procéder à un chargement des grains de catalyseur à la manière d'une pluie pour obtenir une répartition la plus uniforme possible, avec une orientation préférentiellement horizontale des grains, sur l'ensemble de la section transversale de l'enceinte à charger, comme décrit dans US-A-3 804 273, ou US-A-4 051 019. D'autres types d'équipements ont été également proposés en vue d'obtenir une répartition globalement homogène au-dessus de toute la surface du lit à charger, par exemple dans FR-A-2 319 427.

La Demanderesse a pour sa part breveté un procédé et un dispositif pour la distribution uniforme d'un solide sous forme divisée dans une enceinte, qui font l'objet, notamment, de EP-A-007 854 et EP-A-116 246, ainsi que de EP-A-769 462.

Tous ces procédés de chargement, que l'on regroupe sous l'appellation de « chargements denses » (de l'anglais « dense loadings »), entraînent une amélioration très sensible de l'homogénéité de la masse catalytique par diminution, voire suppression, des espaces aléatoires entre les grains observés dans le cas d'un chargement du type à la manche.

La présente invention concerne plus particulièrement les procédés de chargement par effet de pluie, notamment ceux que la Demanderesse a décrits dans les demandes de brevets européens mentionnées ci-dessus, et plus particulièrement dans EP-A-769 462, connus sous l'appellation DENSICAT, et qui se prêtent à des ajustements précis de la distribution des grains à l'intérieur d'une enceinte.

Un tel dispositif, constitué essentiellement d'un équipage mobile, est disposé à la partie supérieure du réacteur au-dessous du trou d'homme à travers lequel le catalyseur est déversé, par exemple par une trémie d'alimentation. Les grains de catalyseur rencontrent dans leur chute des déflecteurs en rotation, rebondissent sur ceux-ci, puis sont déviés latéralement pour être distribués à la manière d'une pluie, de façon homogène, suivant toute la section transversale du réacteur. Un des paramètres les plus importants à maîtriser pour obtenir un effet de pluie uniforme est la vitesse de rotation de l'équipage mobile.

Cette technique de chargement, qui est parfaitement maîtrisée par les opérateurs, a été appliquée avec succès à un grand nombre de réacteurs chimiques, notamment à des réacteurs d'hydrotraitement de charges d'hydrocarbures, pour lesquels il est essentiel d'obtenir une répartition dense et homogène des grains de catalyseur. En effet, les molécules constituant la charge liquide à traiter doivent avoir la même probabilité, en tout point du lit, de rencontrer un même nombre important de grains de catalyseurs, sans espaces distribués de façon aléatoire entre ces grains, c'est-à-dire sans chemins préférentiels que le liquide réactionnel pourrait emprunter au détriment d'une réaction chimique efficace et complète.

En poursuivant ses travaux sur les procédés de chargement de catalyseurs par effet de pluie dans un réacteur fonctionnant en mode bi-phasique, par exemple liquide et gaz, à co-courant ou à contre courant, la Demanderesse a constaté que, malgré l'orientation préférentiellement horizontale des grains obtenue par la distribution par effet de pluie, un nouveau phénomène apparaissait, indépendant des inconvénients précédemment cités pour le chargement à la manche, et ayant pour conséquence une mauvaise homogénéité de la répartition du liquide réactionnel au sein de la masse catalytique. En effet, et plus particulièrement dans le cas de chargements de réacteurs présentant des hauteurs importantes, notamment quand cette hauteur est supérieure à deux fois son diamètre, des effets dits « de parois » tendent à conduire le liquide vers la paroi interne du réacteur, créant ainsi des nouveaux chemins préférentiels qu'emprunte le liquide au détriment de l'ensemble de la masse catalytique.

Ce phénomène, qui se traduit par des variations locales de porosité apparente du lit catalytique, laquelle devient maximum au contact d'une surface, a été constaté par H. KOYAMA & al., Oil and Gas Journal, Nov.13, 1995, p.82, et apparaît de façon plus ou moins importante, quelles que soient la forme précise des grains de catalyseur, ainsi que leurs dimensions. Dans les cas les plus défavorables, le liquide réactionnel s'engouffre dans la zone la plus poreuse, c'est-à-dire près de la paroi interne du réacteur et s'accélère sous l'effet de la gravité. De plus, la concentration en gaz étant moins importante dans cette zone du réacteur, le risque de cokage le long de la paroi a une forte probabilité d'augmenter. Il arrive également que des points chauds apparaissent dans la masse catalytique mal irriguée par le liquide réactionnel, conduisant à une instabilité du réacteur pouvant se traduire pour une désactivation du catalyseur. Des effets complémentaires dus à une mauvaise distribution du liquide sur la partie supérieure du lit catalytique ou, plus particulièrement, la présence d'une crépine à la sortie du réacteur, viennent également perturber la distribution du liquide dans la masse catalytique.

Tous ces inconvénients ont donc un impact négatif sur le rendement de la réaction et sur la durée de vie du catalyseur, entraînant ainsi des conséquences pouvant être importantes sur les matériels et la qualité des produits fabriqués, et qui deviennent donc fortement préjudiciables pour l'exploitant. Ceci est d'autant plus contraignant que la sévérité des spécifications augmentant, et notamment la baisse de la teneur en soufre des gazoles, implique une optimisation de l'hydrodynamique des réacteurs de désulfuration.

La présente invention vise à remédier à ces sérieux inconvénients rencontrés dans la pratique, en modifiant temporairement, au cours du chargement par effet de pluie du réacteur avec les particules du catalyseur, les conditions de chargement de ce réacteur, de manière à compenser, par des modifications appropriées du profil du lit catalytique en cours de formation, les variations locales de porosité apparente du lit catalytique, et donc de modifier les conditions d'écoulement du liquide réactionnel dans le lit catalytique, pour aboutir à une meilleure répartition de l'écoulement de ce liquide à l'intérieur de la masse catalytique.

L'invention a par conséquent pour objet un procédé de chargement d'une enceinte avec des particules solides, notamment d'un réacteur chimique avec des particules de catalyseur, visant à améliorer l'écoulement d'un liquide entre ces particules au cours du fonctionnement du réacteur, dans lequel les particules sont distribuées de façon homogène à la manière d'une pluie pour constituer un lit horizontal de particules sur toute la section de ladite enceinte, ce procédé étant caractérisé en ce qu'au cours du chargement, on modifie temporairement au moins une fois les conditions de chargement, de façon à ce que le profil de la surface du lit de particules fasse, au moins à la périphérie de celle-ci, un angle α avec l'horizontale compris entre 6° et 25°, et de préférence entre 10° et 20°, et en ce que l'on rétablit ensuite des conditions de chargement pour obtenir un lit horizontal.

Après un début de chargement classique, c'est-à-dire visant à constituer un lit dans lequel les particules solides sont réparties préférentiellement à l'horizontale, l'exploitant modifie donc au moins une fois les conditions de chargement pour obtenir un nouveau profil de la surface du lit de particules, de préférence quand la hauteur de ce lit restant à charger est comprise entre 0,75 et 2,5 fois le diamètre du réacteur et, de façon encore plus préférée, entre 1 et 2 fois ce diamètre. C'est en effet en modifiant les conditions de chargement de façon temporaire, de manière à ce que le profil de la surface du lit de particules fasse, au moins à la périphérie de celle-ci, un angle négatif avec l'horizontale pour obtenir un profil de chargement de type concave, c'est-à-dire un profil visant à incliner la surface du lit catalytique en cours de formation, depuis la paroi de l'enceinte vers l'intérieur de celle-ci, pour former une dépression dans la partie centrale de la surface du lit catalytique, que le liquide réactionnel peut être redirigé vers le centre de la masse catalytique, en minimisant ainsi les effets d'écoulements préférentiels dus à la paroi du réacteur.

L'exploitant peut également, conformément à la présente invention, corriger les effets d'aspiration dus à la crépine située à la sortie du réacteur, généralement suivant l'axe longitudinal de ce réacteur. En effet et de façon connue en soi, la présence d'une crépine à la sortie d'un réacteur, habituellement constituée d'une plaque perforée d'une pluralité de trous de diamètres pouvant être différents entre eux, incite le liquide réactionnel à utiliser des chemins préférentiels qui sont les chemins les plus courts en direction de la crépine, au détriment de la masse catalytique environnante. En conférant à la surface du lit de particules un profil faisant un angle positif avec l'horizontale, au moins à la périphérie de celle-ci, c'est-à-dire un profil de chargement de type convexe avec la surface du lit de particules inclinée vers le bas de l'enceinte au voisinage de la paroi de celle-ci, de façon à former un dôme dans la partie centrale de la surface du lit catalytique, le liquide peut être redirigé vers les grains de catalyseurs les plus extérieurs par rapport à l'axe longitudinal du réacteur, permettant ainsi une circulation plus homogène du liquide réactionnel, dans toute la masse du lit catalytique.

De préférence, la modification des conditions de chargement pour obtenir un profil convexe de la surface du lit catalytique intervient quand la hauteur de chargement du lit de particules est inférieure à 0,5 fois le diamètre du réacteur et, de façon encore plus préférée, inférieure à 0,2 fois ce diamètre.

Quelle que soit la forme du profil de chargement adoptée pendant la modification temporaire des conditions de chargement, les réglages des conditions opératoires du dispositif de répartition par effet de pluie des grains de catalyseurs sur la section transversale de l'enceinte sont choisis de telle manière que l'angle formé avec l'axe de la pente de la surface du lit de particules et l'horizontale, que celui-ci soit positif ou négatif, est compris entre 6° et 25° et, de préférence, entre 10° et 20°.

Un profil de chargement résultant à la fois d'un chargement de type concave et de type convexe peut également être obtenu avec des réglages spécifiques du dispositif mobile de répartition des grains de catalyseur par effet de pluie.

Des emplacements prédéterminés de la surface du lit de particules en cours de formation auxquels peut également être appliquée une modification temporaire des conditions de chargement peuvent être excentrés par rapport à l'axe longitudinal du réacteur ou constitués par au moins une portion de la surface du lit, par exemple un anneau, ou des parties de cette surface contiguës à la face interne de la ou des parois de l'enceinte, auxquelles on peut souhaiter conférer un profil incliné depuis ces parois vers l'intérieur de l'enceinte ou inversement.

Après ces modifications temporaires des conditions de chargement, les réglages initiaux du dispositif de répartition homogène des grains de catalyseur par effet de pluie sont rétablis pour obtenir un profil horizontal du lit catalytique.

Tous les modes de chargement à effet de pluie mis en oeuvre de façon classique, c'est-à-dire dont le dispositif de répartition des grains permet une distribution homogène de ceux-ci suivant toute la section transversale du réacteur ou de l'enceinte à charger, sont susceptibles d'être utilisés conformément à l'invention.

Un mode de chargement à effet de pluie particulièrement préféré utilise un dispositif de distribution rotatif disposé au-dessous d'un système d'alimentation en particules de l'enceinte et dont la vitesse de rotation est un paramètre de fonctionnement réglable. De préférence, le dispositif comprend des déflecteurs souples, suspendus à un axe apte à entrer en rotation et articulés sur cet axe de manière à se soulever sous l'effet de la force centrifuge. En effet, cette technique est parfaitement maîtrisée par les opérateurs et elle se prête sans aucun problème à des modifications temporaires précises des conditions de chargement, en des emplacements prédéterminés de la hauteur du lit catalytique en cours de formation, en vue de modifier le profil de la surface du lit catalytique.

Avec ce mode de chargement préféré, un profil convexe du lit catalytique en cours de chargement peut être obtenu en diminuant la vitesse de rotation de l'équipage mobile du dispositif Densicat, tandis qu'un profil concave est obtenu par une augmentation de cette vitesse de rotation, par rapport à la vitesse nominale nécessaire et habituellement utilisée pour obtenir un profil de chargement horizontal.

La modification des conditions de chargement de l'enceinte, en vue de faire varier localement le profil de la surface du lit de particules en cours de formation, peut intervenir une ou plusieurs fois lorsque le niveau du lit de particules chargées dans cette enceinte atteint un niveau prédéterminé dans la colonne.

Une forme de mise en oeuvre de l'invention va être décrite ci-après à titre d'exemple, en référence aux dessins schématiques annexés.

Sur ces dessins :
- la figure 1 est une coupe verticale d'un réacteur chimique en cours de chargement avec des particules de catalyseur, illustrant un premier type de modification locale temporaire de la surface du lit catalytique ;
- la figure 2 est une vue analogue à la figure 1, illustrant un autre type de modification locale temporaire de la surface du lit catalytique.

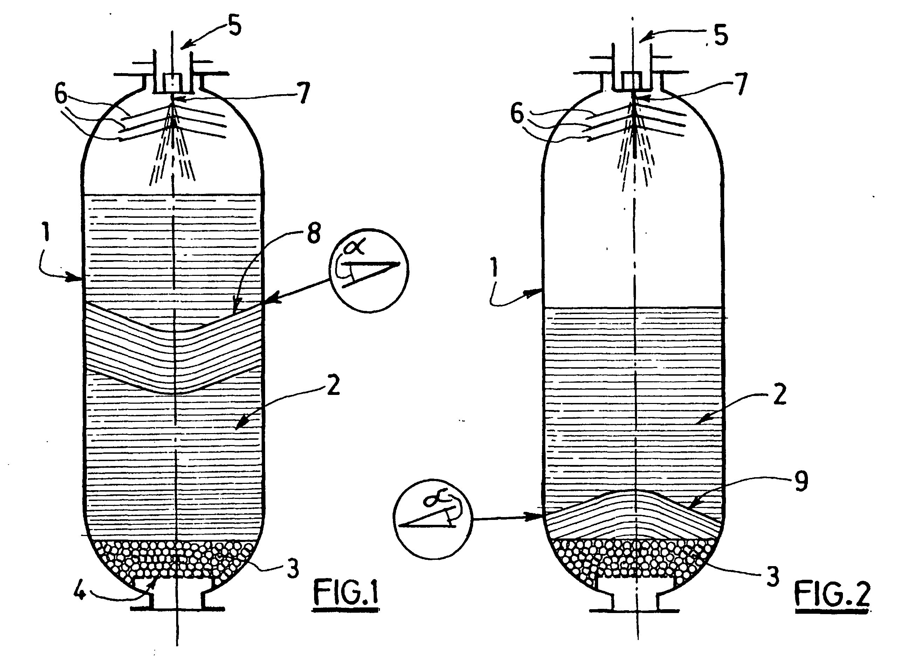

La figure 1 représente une enceinte 1, par exemple un réacteur chimique, dont le diamètre et la hauteur peuvent atteindre plusieurs mètres. Dans cette figure 1, le lit catalytique 2, dont la masse est supportée dans le réacteur 1 par des billes inertes 3, elles-mêmes disposées au-dessus de la crépine 4 de sortie du réacteur, est en cours de chargement. Les grains de catalyseur sont introduits en continu dans la partie haute du réacteur, par exemple par l'intermédiaire d'une trémie d'alimentation 5, puis tombent sur un dispositif de répartition en pluie permettant d'obtenir une distribution homogène de ces grains dans le réacteur 1.

Le dispositif représenté et utilisé d'une manière préférée est dénommé commercialement « DENSICAT» . Il est décrit en détail dans EP-A-769 462, Ce dispositif comprend des déflecteurs souples 6, constitués ici de lanières en caoutchouc, solidaires à plusieurs niveaux d'un axe mobile 7, dont la vitesse de rotation peut varier de façon commandée, pour ajuster le profil du chargement. Les déflecteurs 6 s'écartent d'autant de l'axe mobile 7 que la vitesse de rotation de celui-ci augmente. Cette vitesse peut atteindre plus d'une centaine de tours par minute. Les grains de catalyseurs, après leur chute sur ces déflecteurs en rotation, sont répartis à la manière d'une pluie dans la phase gazeuse sur toute la section transversale du réacteur 1, au-dessus du lit 2 en cours de formation.

Or un tel réacteur chimique 1 est en général utilisé pour faire réagir une charge liquide, par exemple une charge d'hydrocarbures s'écoulant généralement de haut en bas, avec un gaz, par exemple de l'hydrogène, circulant à co-courant de haut en bas, et il importe donc que les fluides réactionnels ou une partie de ceux-ci, notamment le liquide, n'adoptent pas de chemins préférentiels dans le lit catalytique au détriment d'une réaction chimique complète, préjudiciable à la durée de vie du catalyseur et au rendement de la réaction.

Dans un réacteur de ce type, chargé dense, c'est-à-dire avec des grains de catalyseurs répartis préférentiellement à l'horizontale, il est connu que la porosité apparente du catalyseur devient maximale au contact de la paroi interne du réacteur et que le liquide emprunte préférentiellement ces chemins ainsi créés, subissant ensuite une accélération de la vitesse d'écoulement due à la hauteur du lit catalytique ainsi traversé. La distribution du liquide dans le lit catalytique en est donc perturbée, avec des écoulements plus importants au contact des parois du réacteurs, provoquant par conséquent une réaction chimique incomplète.

Conformément à l'invention, on compense cette variation d'homogénéité en augmentant temporairement la vitesse de rotation de l'équipage mobile du dispositif Densicat de façon à ce que le profil de la surface 8 du lit de particules fasse au moins à la périphérie de cette surface, un angle α négatif avec l'horizontale compris entre 6° et 25° et de préférence compris entre 10° et 20°, afin de redistribuer le liquide vers l'axe longitudinal de la masse catalytique. Cette modification des conditions de chargement intervient préférablement quand la hauteur du lit catalytique restant à charger est comprise entre 0,75 et 2,5 fois le diamètre du réacteur et, de façon encore plus préférée, entre 1 et 2 fois ce diamètre.

C'est ainsi que, dans le cas de la figure 1, après une première partie chargée dense horizontale obtenue avec une vitesse de rotation de l'équipage mobile de, par exemple 80 tours par minute, un effet préférentiel d'écoulement du liquide réactionnel dans la zone des parois du réacteur est compensé par un dépôt temporairement majoré de grains de catalyseur dans ces zones, visant à obtenir un profil concave de la surface du lit catalytique, réalisé par une augmentation de la vitesse de rotation de l'appareil Densicat égale par exemple à 120 tours par minute.

Suivant les besoins, comme représenté sur la figure 2, où les organes déjà décrits sont désignés par les mêmes chiffres de référence, on peut aussi modifier les conditions de chargement du réacteur 1 en provoquant une diminution temporaire du chargement au voisinage des parois, pour que le profil de la surface du lit catalytique 9 fasse au moins à la périphérie de celle-ci un angle α positif avec l'horizontale compris entre 6° et 25° et, de préférence, compris entre 10° et 20°. Ce type de modification des conditions de chargement des grains de catalyseurs pour, non plus obtenir un profil horizontal du lit catalytique, mais favoriser un profil convexe 9, est utilisé de préférence pour éviter l'effet de la crépine tel que décrit précédemment. Généralement, ce profil de chargement convexe est mis en oeuvre par diminution de la vitesse de rotation de l'équipage mobile de l'appareil Densicat, par exemple 50 tours par minute, dès le chargement des premiers grains de catalyseurs au voisinage de la crépine, ou quand la hauteur de chargement du lit catalytique est inférieure à 0,5 fois le diamètre du réacteur, et de préférence à 0,2 fois ce diamètre.

Bien entendu, ces modifications différentes du profil de chargement peuvent intervenir une seule fois au cours du chargement, mais aussi séquentiellement au cours d'un même chargement d'un même réacteur, ou encore être réalisées successivement pour obtenir un même profil conjuguant les formes concaves et convexes.

Généralement, la hauteur de la portion du lit catalytique chargée non horizontale, c'est-à-dire avec des conditions particulières de chargement, est comprise entre 0,2 et 0,5 fois la hauteur du réacteur, et de préférence entre 0,3 et 0,4 fois cette hauteur.

Si ces modifications engendrent un profil symétrique de la surface du lit catalytique par rapport à l'axe horizontal, elles peuvent également, pour une application particulière et grâce aux adaptations possibles du dispositif Densicat, être décentrées et réalisées avec un sommet ou un creux en-dehors de l'axe longitudinal.

L'Exemple qui suit illustre une forme de mise en oeuvre de l'invention et n'a pas de caractère limitatif.

### Exemple

Trois séries d'essais de chargement dense de grains de catalyseur avec le procédé Densicat, tel que décrit dans le brevet EP-A-769 462, (repérés 1,2 et 3 dans le Tableau ci-dessous), ont été réalisés au laboratoire avec le même catalyseur, sur une colonne en acier inoxydable dont les dimensions sont les suivantes :
- diamètre 0,4 m,
- hauteur de la colonne : 2,0 m.

Le fond de la colonne a été cloisonné en 3 zones distinctes concentriques de même surface, repérées, en partant de la position de l'axe de la colonne, « Centre », « Milieu » et « Extérieur » dans le tableau ci-dessous. Ces 3 zones permettent de recueillir sélectivement la plus grande partie du liquide introduit en haut de colonne.

Le catalyseur utilisé pour les essais est constitué principalement d'alumine et se présente sous forme d'extrudés trilobes secs dont les dimensions moyennes sont les suivantes :
- diamètre équivalent : 1,6 mm
- longueur : 3,7 mm

Pour chacun des essais, l'eau qui simule le liquide réactionnel est introduite de façon homogène dans la partie supérieure du réacteur, au-dessus du lit catalytique. Les essais sont réalisés avec du catalyseur neuf.

### Essai 1

Le catalyseur est chargé de façon classique avec une machine de type Densicat, c'est-à-dire avec une orientation préférentiellement horizontale des grains de catalyseur, sur une hauteur de 2,0 m.

La vitesse de rotation de la machine Densicat est pour cet essai de 60 tours par minutes.

### Essai 2

Cet essai comprend trois étapes de chargement :
1/ Le même catalyseur neuf que dans l'Essai 1 est chargé dans les conditions de cet essai, jusqu'à une hauteur de chargement de 1,2 m.
2/Le catalyseur est ensuite chargé conformément à l'invention pour obtenir un profil de lit catalytique concave sur une hauteur de 0,4 m, mesuré au centre de la surface du lit catalytique.
   Pour obtenir ce résultat et notamment un angle négatif du profil du lit catalytique avec l'horizontale compris entre 10° et 20°, la vitesse de rotation de la machine Densicat est de 78 tours par minute.
3/La fin du chargement de la colonne jusqu'à une hauteur de 2,0 m est réalisée conformément aux conditions adoptées pour l'essai 1, de manière à obtenir un profil de chargement horizontal.

### Essai 3

Cet essai comporte les quatre étapes de chargement suivantes :
1/Le catalyseur est chargé de telle manière que le profil du lit catalytique est de forme convexe sur une hauteur de 0,3 m, mesuré au centre de la surface du lit catalytique.
   La vitesse de rotation de la machine Densicat est de 45 tours par minutes pour obtenir ce type de profil et un angle avec l'horizontale compris entre 10° et 20°.
2/ Le catalyseur est ensuite chargé conformément aux étapes 1 à 3 de l'Essai 2. jusqu'à la hauteur totale de chargement de la colonne.

Les résultats sont rassemblés dans le Tableau suivant :

| **Essais** | **1** | **2** | **3** |
|---|---|---|---|
| **Prélèvements** | **% de liquide recueilli** | | |
| Centre | 32,0 | 36,2 | 33,0 |
| Milieu | 21,2 | 35,5 | 36,5 |
| Extérieur | 46,8 | 28,3 | 30,5 |
| Ecarts maximum | 25,6 | 7,9 | 6,0 |

On voit qu'un chargement dense classique (Essai 1) par effet de pluie ne permet pas d'obtenir une parfaite distribution uniforme du liquide en sortie du réacteur. En effet, le liquide subit l'effet de paroi, c'est-à-dire qu'il emprunte des chemins préférentiels situés le long de la paroi interne du réacteur au détriment du reste de la masse catalytique.

Pour remédier à cet inconvénient et conformément à la présente invention, un chargement temporaire permettant d'obtenir un profil concave du lit catalytique en cours de formation (Essai 2), permet de réorienter la distribution du flux de liquide à l'intérieur du lit.

Pour parfaire cette répartition, un deuxième chargement spécifique temporaire, mais convexe (Essai 3) permet d'obtenir une répartition améliorée du flux de liquide à la sortie du réacteur.

On notera que le procédé conforme à l'invention ne nécessite aucun appareillage auxiliaire pour son application et qu'il peut être mis en oeuvre de façon particulièrement simple, en utilisant les dispositifs de chargement à effet de pluie du type DENSICAT de la technique antérieure.

## Revendications

1. Procédé de chargement d'une enceinte (1) avec des particules solides, notamment d'un réacteur chimique avec des particules de catalyseur, visant à améliorer l'écoulement d'un liquide entre ces particules au cours du fonctionnement du réacteur, dans lequel les particules sont distribuées de façon homogène à la manière d'une pluie pour constituer un lit horizontal de particules sur toute la section de ladite enceinte, ce procédé étant **caractérisé en ce qu'**au cours du chargement, on modifie temporairement au moins une fois les conditions de chargement, de façon à ce que le profil de la surface (8,9) du lit de particules fasse, au moins à la périphérie de celle-ci, un angle α avec l'horizontale compris entre 6° et 25°, et de préférence entre 10° et 20°, et **en ce que** l'on rétablit ensuite des conditions de chargement pour obtenir un lit horizontal.

2. Procédé selon la revendication 1, **caractérisé en ce que** la valeur de l'angle α est positive ou négative suivant les conditions opératoires temporaires adoptées pour le chargement des particules solides dans l'enceinte (1).

3. Procédé selon l'une des revendications 1 et 2, **caractérisé en ce que** la modification temporaire des conditions de chargement pour obtenir un angle α négatif intervient lorsque la hauteur du lit de particules restant à charger (2) dans l'enceinte (1) est comprise entre 0,75 et 2,5 fois le diamètre de l'enceinte (1), et de préférence, entre 1 et 2 fois ce diamètre.

4. Procédé selon l'une des revendications 1 et 2, **caractérisé en ce que** la modification temporaire des conditions de chargement pour obtenir un angle α positif intervient lorsque la hauteur de chargement du lit de particules (2) dans l'enceinte (1) est inférieure à 0,5 fois le diamètre de l'enceinte (1), et, de préférence, inférieure à 0,2 fois ce diamètre.

5. Procédé selon l'une des revendications 1 à 4, **caractérisé en ce que** la hauteur du lit de particules chargé avec des modifications temporaires des conditions de chargement est comprise entre 0,2 et 0,5 fois la hauteur de l'enceinte (1) et de préférence, entre 0,3 et 0,4 fois cette hauteur.

6. Procédé selon les revendications 1 à 5, **caractérisé en ce que** la modification temporaire des conditions de chargement intervient plus d'une fois en cours de remplissage de l'enceinte (1).

7. Procédé selon l'une des revendications 1 à 6, **caractérisé en ce que** les différents types de modifications temporaires des conditions de chargement sont associés pour obtenir un seul profil spécifique du lit de particules en cours de chargement.

8. Procédé selon l'une des revendications 1 à 7, **caractérisé en ce que** le chargement à effet de pluie de l'enceinte (1) est réalisé à l'aide d'un dispositif de distribution rotatif disposé au-dessous du système (5) d'alimentation en particules de l'enceinte (1).

9. Procédé selon la revendication 8, **caractérisé en ce que** le dispositif de distribution rotatif comprend des déflecteurs souples (6) suspendus à un axe (7) apte à entrer en rotation et articulés sur cet axe de manière à se soulever en s'écartant de l'axe sous l'effet de la force centrifuge.

10. Procédé selon l'une des revendications 8 et 9, **caractérisé en ce que** l'axe (7) du dispositif de distribution est entraîné en rotation à une vitesse inférieure à 120 t/mn et, de préférence, inférieure à 100 t/mn.

11. Procédé selon les revendications 9 et 10, **caractérisé en ce que** le profil du lit de particules (2) en cours de chargement est modifié en faisant varier la vitesse de rotation du dispositif de distribution.

12. Procédé selon l'une des revendications 1 à 11, **caractérisé en ce que** les modifications temporaires du profil de chargement concernent au moins une portion de la surface du lit de particules (2).

13. Procédé selon les revendications 1 à 12, **caractérisé en ce que** les modifications temporaires du profil de chargement du lit de particules sont excentrées par rapport à l'axe longitudinal du réacteur.

## Patentansprüche

1. Verfahren zum Beladen eines Behälters (1) mit Feststoffteilchen, insbesondere eines chemischen Reaktors mit Katalysatorteilchen, zum Verbessern des Ablaufs einer Flüssigkeit zwischen diesen Teilchen im Verlauf des Betriebs des Reaktors, in dem die Teilchen homogen nach der Art eines Regens verteilt werden, um ein horizontales Bett von Teilchen über den gesamten Querschnitt des besagten Behälters aufzubauen, wobei das Verfahren **dadurch gekennzeichnet ist, daß** im Verlauf der Beladung zeitweilig mindestens einmal die Beladungsbedingungen verändert werden, derart, daß das Oberflächenprofil (8, 9) des Teilchenbetts, mindestens an der Peripherie davon, einen Winkel α mit der Horizontalen von zwischen einschließlich 6° und 25° und vorzugsweise zwischen 10° und 20° bildet, und daß danach die Bedingungen der Beladung zum Erhalten eines horizontalen Betts wiederhergestellt werden.

2. Verfahren gemäß Anspruch 1, **dadurch gekennzeichnet, daß** der Wert des Winkels α positiv oder negativ ist, je nach den zeitweiligen Betriebsbedingungen, die zur Beladung der Festteilchen in den Behälter (1) angewandt werden.

3. Verfahren gemäß einem der Ansprüche 1 und 2, **dadurch gekennzeichnet, daß** die zeitweilige Veränderung der Bedingungen der Beladung zum Erhalt eines negativen Winkels α zwischengeschaltet wird, wenn die Höhe des Betts der Teilchen, die im Behälter (1) zum Beladen bleiben (2), zwischen einschließlich dem 0,75- und dem 2,5-fachen des Durchmessers des Behälters (1) und vorzugsweise zwischen dem 1- und dem 2-fachen dieses Durchmessers liegt.

4. Verfahren gemäß einem der Ansprüche 1 und 2, **dadurch gekennzeichnet, daß** die zeitweilige Veränderung der Bedingungen der Beladung zum Erhalt eines positiven Winkels α zwischengeschaltet wird, wenn die Höhe der Beladung des Betts der Teilchen (2) im Behälter (1) weniger als das 0,5-fache des Durchmessers des Behälters (1) und vorzugsweise weniger als das 0,2-fache dieses Durchmessers beträgt.

5. Verfahren gemäß einem der Ansprüche 1 bis 4, **dadurch gekennzeichnet, daß** die Höhe des Betts der Teilchen, die mit den zeitweiligen Veränderungen der Beladungsbedingungen beladen wurde, zwischen einschließlich dem 0,2- und 0,5-fachen der Höhe des Behälters (1) und vorzugsweise zwischen dem 0,3- und 0,4-fachen dieser Höhe ist.

6. Verfahren gemäß den Ansprüchen 1 bis 5, **dadurch gekennzeichnet, daß** die zeitweilige Veränderung der Bedingungen der Beladung mehr als einmal im Verlauf des Auffüllens des Behälters (1) zwischengeschaltet wird.

7. Verfahren gemäß einem der Ansprüche 1 bis 6, **dadurch gekennzeichnet, daß** die unterschiedlichen Arten der zeitweiligen Veränderungen der Bedingungen der Beladung verknüpft werden zum Erhalt eines einzigen speziellen Profils des Betts der Teilchen im Verlauf der Beladung.

8. Verfahren gemäß einem der Ansprüche 1 bis 7, **dadurch gekennzeichnet, daß** die Beladung mit der Wirkung des Regens in den Behälter (1) mit Hilfe einer Rotationsverteilereinrichtung verwirklicht wird, die unter dem Zufuhrsystem (5) der Teilchen in den Behälter (1) angeordnet ist.

9. Verfahren gemäß Anspruch 8, **dadurch gekennzeichnet, daß** die Rotationsverteilereinrichtung biegsame Ablenker (6) aufweist, die an einer zur Rotation befähigten Achse (7) aufgehängt sind und derart gegenüber dieser Achse gelenkig sind, daß sie sich unter der Wirkung der Zentrifugalkraft von der Achse entfernend aufrichten.

10. Verfahren gemäß einem der Ansprüche 8 und 9, **dadurch gekennzeichnet, daß** die Achse (7) der Verteilereinrichtung bei einer Geschwindigkeit von weniger als 120 UPM und vorzugsweise von weniger als 100 UPM unter Rotation steht.

11. Verfahren gemäß den Ansprüchen 9 und 10, **dadurch gekennzeichnet, daß** das Profil des Betts von Teilchen (2) im Verlauf der Beladung verändert wird, indem die Rotationsgeschwindigkeit der Verteilereinrichtung variiert wird.

12. Verfahren gemäß einem der Ansprüche 1 bis 11, **dadurch gekennzeichnet, daß** die zeitweilige Veränderung des Profils der Beladung mindestens einen Teil der Oberfläche des Betts der Teilchen (2) betrifft.

13. Verfahren gemäß den Ansprüchen 1 bis 12, **dadurch gekennzeichnet, daß** die zeitweiligen Veränderungen des Profils der Beladung des Betts von Teilchen im Verhältnis zur Längsachse des Reaktors aus dem Zentrum gebracht sind.

## Claims

1. A method for charging an enclosure (1) with solid particles, in particular a chemical reactor with catalyst particles, with a view to improving the flow of a liquid between these particles during the operation of the reactor, in which the particles are distributed uniformly in a rain effect so as to form a horizontal bed of particles over the entire section of said enclosure, said method being **characterised in that**, during the charging, the charging conditions are temporarily modified at least once so that the profile of the surface (8,9) of the bed of particles forms, at least on the periphery thereof, an angle α to the horizontal of between 6° and 25°, and preferably between 10° and 20°, and **in that** the charging conditions are then restored so as to obtain a horizontal bed.

2. A method according to claim 1, **characterised in that** the value of the angle α is positive or negative in accordance with the temporary operating conditions adopted for the charging of the solid particles into the enclosure (1).

3. A method according to either one of claims 1 and 2, **characterised in that** the temporary modification of the charging conditions to obtain a negative angle α takes place when the height of the bed of particles remaining to be charged (2) into the enclosure (1) is between 0.75 and 2.5 times the diameter of the enclosure (1) and, preferably, between 1 and 2 times this diameter.

4. A method according to either one of claims 1 and 2, **characterised in that** the temporary modification of the charging conditions to obtain a positive angle α takes place when the charging height of the bed of particles (2) in the enclosure (1) is less than 0.5 times the diameter of the enclosure (1) and, preferably, less than 0.2 times this diameter.

5. A method according to any one of claims 1 to 4, **characterised in that** the height of the charged bed of particles with the temporary modifications of the charging conditions is between 0.2 and 0.5 times the height of the enclosure (1) and, preferably, between 0.3 and 0.4 times this height.

6. A method according to any one of claims 1 to 5, **characterised in that** the temporary modification of the charging conditions takes place more than once during the filling of the enclosure (1).

7. A method according to any one of claims 1 to 6, **characterised in that** the different types of temporary modifications of the charging conditions are associated so as to obtain a single specific profile of the bed of particles in the course of charging.

8. A method according to any one of claims 1 to 7, **characterised in that** the rain-effect charging of the enclosure (1) is carried out by means of a rotating distribution device disposed below the system (5) for feeding particles to the enclosure (1).

9. A method according to claim 8, **characterised in that** the rotating distribution device comprises flexible deflectors (6) which are suspended from a rotatable shaft (7) and which are articulated to said shaft in such a way that they lift and move away from the shaft under the effect of centrifugal force.

10. A method according to either one of claims 8 and 9, **characterised in that** the shaft (7) of the distribution device is caused to rotate at a speed of less than 120 rpm and, preferably, less than 100 rpm.

11. A method according to claims 9 and 10, **characterised in that** the profile of the bed of particles (2) during charging is modified by varying the speed of rotation of the distribution device.

12. A method according to any one of claims 1 to 11, **characterised in that** the temporary modifications of the charging profile involve at least one portion of the surface of the bed of particles (2).

13. A method according to claims 1 to 12, **characterised in that** the temporary modifications of the charging profile of the bed of particles are off-centre in relation to the longitudinal axis of the reactor.
